# EUROPÄISCHE PATENTSCHRIFT

(11) **EP 1 268 231 B1**
(45) Veröffentlichungstag und Bekanntmachung des Hinweises auf die Patenterteilung: **25.02.2004**
(21) Anmeldenummer: 01933775.7
(22) Anmeldetag: 29.03.2001
(51) Int. Cl.: B60K 41/02, F16H 61/20, B60K 31/04

(54) **RANGIERMODUS BEI FAHRZEUGEN MIT AUTOMATISIERTER KUPPLUNG**
MANOEUVRING MODE OF VEHICLES HAVING AN AUTOMATED CLUTCH
MODE DE MANOEUVRE POUR VEHICULES A EMBRAYAGE AUTOMATISE

(30) Priorität: 04.04.2000 DE 10016582
(43) Veröffentlichungstag der Anmeldung: 02.01.2003
(73) Patentinhaber: ZF FRIEDRICHSHAFEN Aktiengesellschaft, 88038 Friedrichshafen (DE)
(72) Erfinder: SCHWAB, Manfred, 88212 Ravensburg (DE); HÄRDTLE, Wilhelm, 88677 Markdorf (DE)
(86) Internationale Anmeldenummer: PCT/EP2001/003586
(87) Internationale Veröffentlichungsnummer: WO 2001/074618

(56) Entgegenhaltungen:
- DE-A- 3 334 723
- DE-A- 19 721 034
- DE-A- 19 753 764
- DE-C- 19 625 502
- FR-A- 2 764 560

## Beschreibung

Die Erfindung betrifft einen Rangiermodus für Fahrzeuge mit automatisierter Kupplung nach dem Oberbegriff von Anspruch 1, wie aus der DE 33 34723 A bekannt.

Bei Fahrzeuggetrieben, die ohne ein Kupplungspedal ausgeführt sind, besteht der Wunsch bei manchen Rangiervorgängen, den rechten Fuß, der üblicherweise zum Gasgeben und damit zur Abgabe eines Drehmomentsollvorgabesignals benutzt wird, auf dem Bremspedal zu belassen, um bei Bedarf im Fall des Auftretens eines Gefahrenmomentes sehr schnell das Fahrzeug bremsen zu können.

Aus der EP 0 731 294 A2 ist ein Verfahren für einen Rangiermodus von Fahrzeugen mit automatisierten Getrieben bekannt. Dort wird vorgeschlagen, in Abhängigkeit eines vom Fahrzeugführer gewählten Kriechmodus die Gaspedalauslenkung so anzupassen, daß ein größerer Betätigungswinkel für eine entsprechende Einspritzmenge zugelassen wird als in einem anderen Fahrmodus. Das Fahrzeug kann in diesem Modus bei gleichem Verstellwinkel des Gaspedals mit einer geringeren Geschwindigkeit bewegt werden. Das Verfahren weist den Nachteil auf, daß der Fahrzeugführer zur Bestimmung der Rangiergeschwindigkeit seinen rechten Fuß auf dem Gaspedal belassen muß. Im Gefahrenmoment muß er die Pedale wechseln, um bremsen zu können.

Aus der DE 197 21 034 A ist ein Abschaltverfahren für den Kriechvorgang mittels Betätigung der Bremse bekannt.

Der vorliegenden Erfindung liegt die Aufgabe zugrunde, ein Verfahren aufzuzeigen, daß einen schnellen Einfluß auf Verzögerungseinrichtungen des Fahrzeugs erlaubt.

Die Aufgabe wird gelöst durch ein Verfahren mit den Merkmalen des Anspruchs 1. Ausgestaltungen sind Gegenstand von Unteransprüchen.

Bei einem Verfahren zur Bestimmung eines definierten Kriechvorganges eines Kraftfahrzeuges, weist das Fahrzeug eine automatisierte Kupplung mit einer Steuereinrichtung, ein Gaspedal und ein Bremspedal auf und das Fahrzeug besitzt ein Betätigungselement, das zur Aktivierung des Kriechvorganges ausgelöst wird. Die Zeit nach der Aktivierung des Kriechvorganges durch das Betätigungselement wird gemessen und mit einem Referenzwert verglichen. Nach Überschreitung des Referenzwertes beginnt der Kriechvorgang mit einer vorbestimmbaren Geschwindigkeit und setzt sich fort, solange weder Bremspedal noch Gaspedal aktiviert sind. In einer Ausführung ist die Aktivierung des Kriechvorganges auf die eingelegten Fahrstufen für den automatisierten Vorwärtfahrbereich oder auf den Rückwärtsfahrbereich beschränkt. Damit soll eine Vermeidung des Aktivierens des Kriechvorganges in den Fahrschalterstellungen "Parken" und "Neutral" vermieden werden, um insbesondere ein unbeabsichtigtes Auslösen von Fahrzeugbewegungen nicht entstehen zu lassen. Eine Ausbildung der Erfindung läßt das Aktivieren des Kriechvorganges nur in den eingelegten Fahrstufen für den Rückwärtsfahrbereich zu. In einer Ausführungsform wird das Betätigungselement handgesteuert, d.h. der Fahrzeugführer greift manuell auf das Betätigungselement zu, das sich im Bereich der Bedienelemente für das Fahrzeug befindet, welche im Zugriffsbereich seiner Hände angeordnet sind. In einer anderen Ausführungsform jedoch wird das Betätigungselement mit demjenigen Fuß betätigt, der nicht das Bremspedal betätigt. Eine weitere Ausführungsform sieht vor, daß als Betätigungselement ein Bedienelement für eine Funktion des Fahrzeuges verwendet wird, die eine im Kriechvorgang nicht benötigten Funktion darstellt, so daß hierdurch ein zusätzliches Betätigungselement eingespart werden kann. Als Bedienelemente kommen hierfür beispielsweise der Handhebel für die Betätigung einer zusätzlichen Bremseinrichtung wie eines Retarders in Betracht oder ein Motorbremsschalter, der per Hand oder per Fuß betätigt werden kann. Auch eine Kombinationsbetätigung von mehreren Schaltern kann zur Aktivierung des Kriechvorganges herangezogen werden.

In einer vorteilhaften Ausführungsform sind in der Steuereinrichtung verschiedene feste Rangiergeschwindigkeiten vorgegeben, die über das Betätigungselement abgerufen werden können. Die Auswahl der Rangiergeschwindigkeit erfolgt in einer Ausgestaltungsform der Erfindung durch die Feststellung der Zeit der ununterbrochenen Betätigung des Betätigungselementes und der Zuordnung einer bestimmten Rangiergeschwindigkeit zu einer bestimmten verstrichenen Zeit, und in einer anderen Ausgestaltungsform geschieht die Auswahl der Rangiergeschwindigkeit durch die Feststellung der Anzahl der Betätigungsvorgänge des Betätigungselementes und der Zuordnung einer bestimmten Rangiergeschwindigkeit zu einer bestimmten Anzahl von Betätigungen. In einer vorteilhaften Ausgestaltungsform wird beispielsweise über einen Fahrzeugleitrechner auf den Leerlaufregler eingegriffen zur Korrektur der Leerlaufdrehzahl in Abhängigkeit von eingeschalteten Nebenverbrauchern, die andernfalls die Leerlaufdrehzahl senken würden und die gewünschte Rangiergeschwindigkeit nicht mehr gewährleistet wäre.

Bei der Auslegung der möglichen Rangiergeschwindigkeiten und auch der Dauer, während der diese Geschwindigkeiten anliegen können, muß aufgrund der mit der Rangiergeschwindigkeit verbundenen definierten Kupplungsdifferenzdrehzahl die Belastbarkeit der Kupplung im Auge behalten werden. Dazu kann eine Begrenzung des Kupplungs-Maximal-Momentes dienen oder es werden Kupplungsschutzfunktionen bei einer Überlastung der Kupplung im Langzeitbetrieb vorgesehen. Wenn im Fahrzeug Drehzahlsensoren verwendet werden, deren erkennbare Minimaldrehzahl unterhalb der beim Rangiervorgang erzielten Drehzahlen liegen, so ist eine Steuerung des Rangiervorganges auch durch die Signale über das vorliegende Motormoment, die aus der Einspritzmenge ablesbar sind, und der Kenntnis über eingeschaltete Nebenverbraucher sowie der an der Kupplung anliegenden Differenzdrehzahl möglich.

Die Erfindung wird anhand einer Zeichnung näher erläutert.
Es zeigen:
- Fig. 1: schematisch ein Fahrzeug mit automatisiertem Getriebe;
- Fig. 2: einen Fahrschalter;
- Fig. 3: einen Drehschalter am Fahrschalter;
- Fig. 4: einen weiteren Schalter;
- Fig. 5: eine Schalter im Bereich des Fußes und
- Fig. 6: ein Bedienelement anderer Fahrzeugfunktionen.

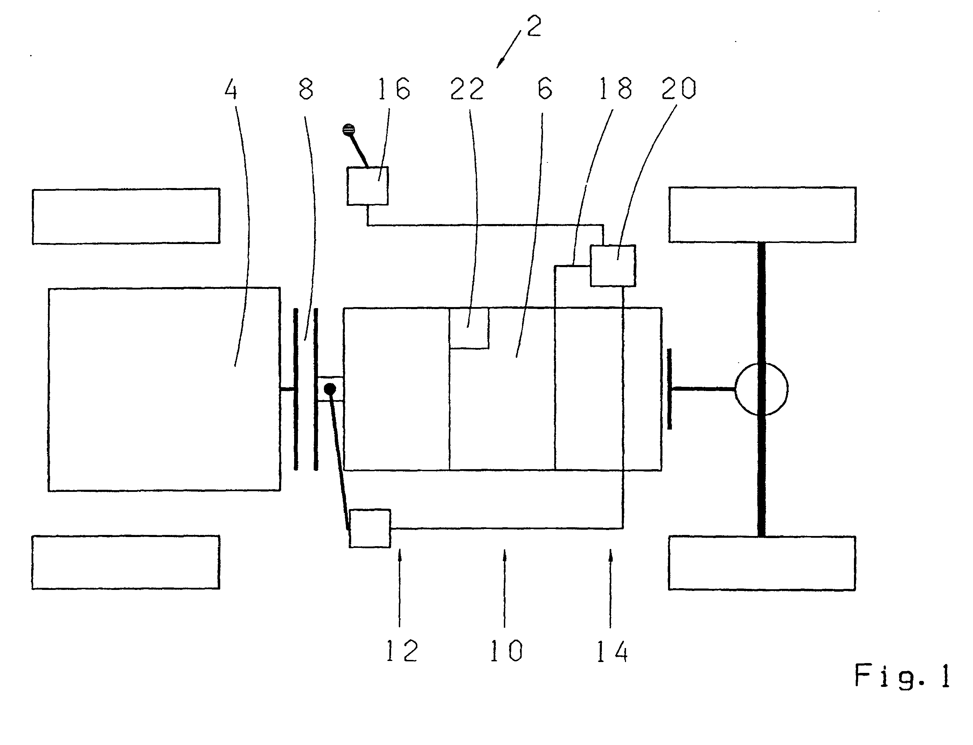

Die Fig. 1 zeigt ein Fahrzeug 2 mit einer Antriebsmaschine 4, einem Getriebe 6 und einer dazwischen angeordnete Kupplung 8. Das Getriebe 6 weist einen Hauptgetriebeteil 10, ein Splitgruppengetriebe 12 und ein Bereichsgruppengetriebe 14 auf. Das Getriebe 6 ist über Verbindungsleitungen 18 mit einer elektronischen Steuereinrichtung 20 verbunden. Ein Fahrschalter 16 ist zum Abgabe von manuellen Eingriffen des Fahrzeugsführers vorgesehen und mit der Steuereinrichtung 20 verbunden. Das Getriebe 6 wird von einer Stelleinrichtung 22 automatisch geschaltet nach Signalen, die die Stelleinrichtung 22 von der Steuereinrichtung 20 erhält. Ebenfalls erhält ein Kupplungssteller 24 Signale von der Steuereinrichtung 20 und betätigt die Kupplung 8.

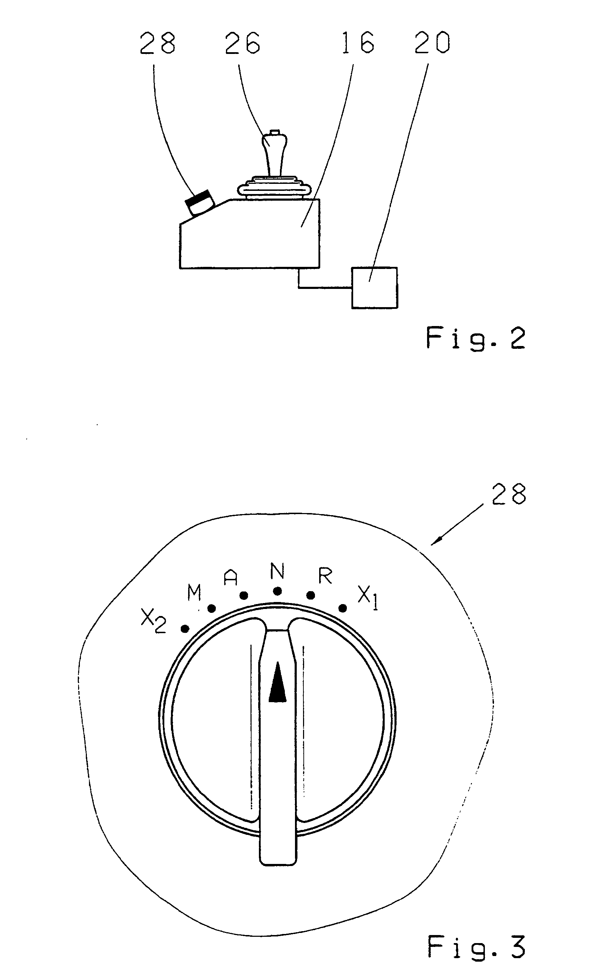

Die Fig. 2 zeigt des Fahrschalter 16, der einen Schalthebel 26 und einen Drehschalter 28 aufweist. Der Fahrschalter 16 ist mit der Steuereinrichtung 20 verbunden. In der Fig. 3 ist der Drehschalter 28 näher dargestellt. Neben einer Neutralstellung "N" ist eine Stellung "R" für den Rückwärtsfahrbereich, eine Stellung "A" für den automatisch geschalteten Vorwärtfahrbereich und eine Stellung "M" für den manuell geschalteten Vorwärtsfahrbereich vorgesehen. Die Stellung "X1" stellt eine Position des Drehschalters 28 dar, in der die Aktivierung des Kriechvorganges im Rückwärtsfahrbereich erfolgt und die folgerichtig von Neutral aus in Richtung der Stellung "R" vorgesehen ist. Die Stellung "X2" stellt eine Position des Drehschalters 28 dar, in der die Aktivierung des Kriechvorganges im Vorwärtsfahrbereich erfolgt und die folgerichtig von Neutral aus in Richtung der Stellung "A" bzw. "M" vorgesehen ist.

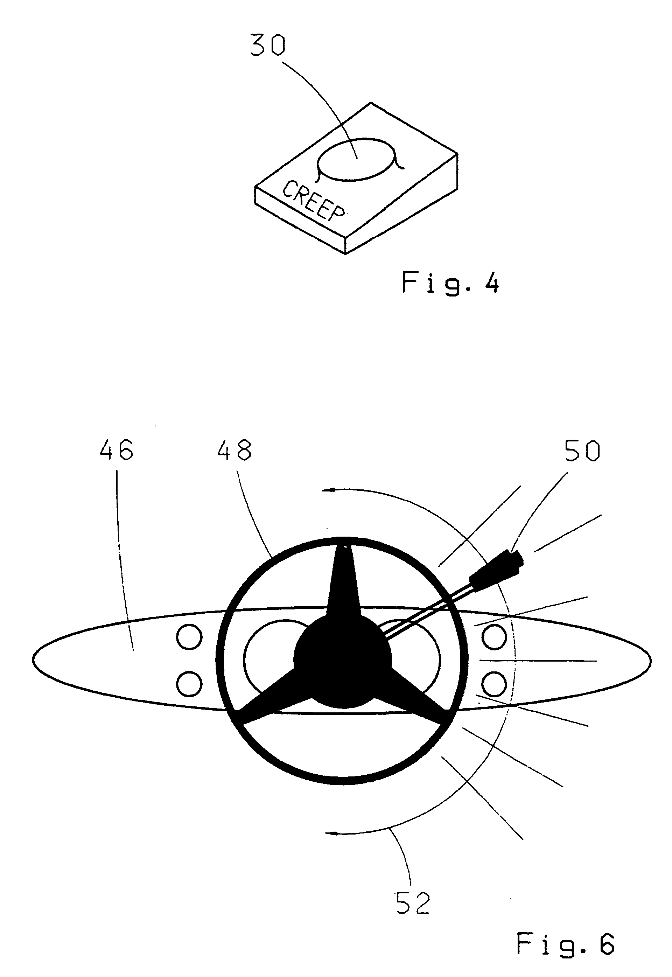

Die Fig. 4 zeigt einen Schalter 30, der auf dem Armaturenbrett der Fahrerkabine oder auch am Fahrschalter 16 angebracht sein kann und ebenfalls als eine alternative Ausführung zu Aktivierung des Kriechvorganges dienen kann.

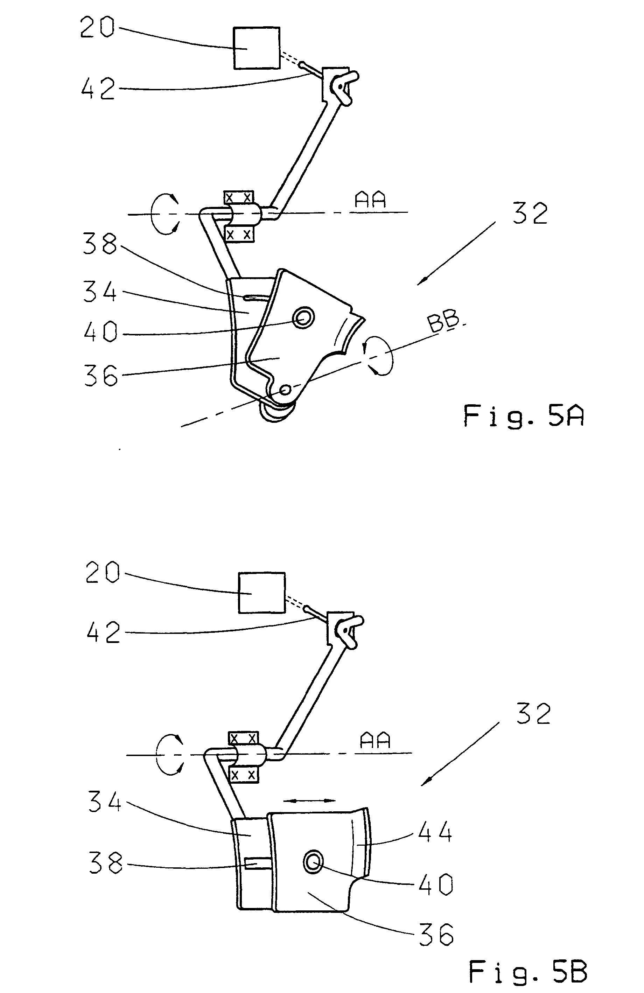

In der Fig. 5 schließlich wird eine Alternative für einen mit dem Fuß betätigten Schalter 32 aufgezeigt. Der Schalter 32 ist um eine Achse AA drehbar an der Karosserie im Fußraum der Fahrerkabine angeordnet und umfaßt in Form eines Fußpedals eine Grundplatte 34, auf der eine um eine Achse BB schwenkbare Platte 36 angeordnet ist. Die Grundplatte 34 weist ein Langloch 38 auf, in das ein Stift 40 an der Platte 36 eingreift, womit der Verschwenkweg der Platte 36 begrenzt ist. Über eine Verbindung 42 ist der Schalter 32 mit der Steuereinrichtung 20 verbunden. Seitlich an der Platte 36 ist ein Anschlag 44 vorgesehen, gegen den eine Schuhkante des Fahrzeugführers angelegt werden kann. Im Unterschied zur Fig. 5A ist in der Fig. 5B die Platte 36 auf der Grundplatte 34 seitlich verschiebbar, wobei wiederum der Stift 40 im Langloch 38 geführt wird, wodurch dessen Weg begrenzt ist.

In der Fig. 6 ist an einem Armaturenbrett 46 der Fahrerkabine ein Lenkrad 48 vorgesehen, an dem ein Lenkstockhebel 50 zur Steuerung eines Retarders angeordnet ist. Der Lenkstockhebel 50 ist entlang des Halbkreises 52 in verschiedene, hier als Striche dargestellte Positionen verstellbar, über die verschiedenen Bremsstufen angesteuert werden. Bei niedrigen Geschwindigkeiten ist ein Retarder wirkungslos. Daher kann in dieser Fahrsituation das Bedienelement Lenkstockhebel 50 zur Aktivierung des Kriechvorganges benutzt werden.

### Bezugszeichen

- 2: Fahrzeug
- 4: Antriebsmaschine
- 6: Getriebe
- 8: Kupplung
- 10: Hauptgetriebeteil
- 12: Splitgruppengetriebe
- 14: Bereichsgruppengetriebe
- 16: Fahrschalter
- 18: Verbindungsleitung
- 20: Steuereinrichtung
- 22: Stelleinrichtung
- 24: Kupplungssteller
- 26: Schalthebel
- 28: Drehschalter
- 30: Schalter
- 32: Schalter
- 34: Grundplatte
- 36: Platte
- 38: Langloch
- 40: Stift
- 42: Verbindung
- 44: Anschlag
- 46: Armaturenbrett
- 48: Lenkrad
- 50: Lenkstockhebel
- 52: Halbkreis

## Patentansprüche

1. Verfahren zur Bestimmung eines definierten Kriechvorganges eines Kraftfahrzeuges (2) mit einer automatisierten Kupplung (8) mit einer Steuereinrichtung (20), mit einem Gaspedal, einem Bremspedal und mit einem Betätigungselement (28, 30, 32), das zur Aktivierung des Kriechvorganges ausgelöst wird, wobei die Zeit nach Aktivierung des Kriechvorganges durch das Betätigungselement (28, 30, 32) gemessen wird **dadurch gekennzeichnet, daß** nach Überschreitung eines Referenzwertes der Kriechvorgang mit einer vorbestimmbaren Geschwindigkeit beginnt und so lange aufrechterhalten wird, bis entweder Bremspedal oder Gaspedal aktiviert werden.

2. Verfahren nach Anspruch 1, **dadurch gekennzeichnet, daß** die automatisierte Kupplung (8) mit einem automatischen oder automatisierten Getriebe (6) verbunden ist und daß die Aktivierung des Kriechvorganges auf die eingelegten Fahrstufen für den automatisierten Vorwärtfahrbereich oder den Rückwärtsfahrbereich beschränkt ist.

3. Verfahren nach Anspruch 1 oder 2, **dadurch gekennzeichnet, daß** die Aktivierung des Kriechvorganges auf die eingelegten Fahrstufen für den Rückwärtsfahrbereich beschränkt ist.

4. Verfahren nach einem der Ansprüche 1 bis 3, **dadurch gekennzeichnet, daß** das Betätigungselement (28, 30) handgesteuert ist.

5. Verfahren nach einem der Ansprüche 1 bis 3, **dadurch gekennzeichnet, daß** das Betätigungselement (32) vom Fahrzeugführer mit demjenigen Fuß betätigt wird, der nicht das Bremspedal betätigt.

6. Verfahren nach einem der Ansprüche 1 bis 5, **dadurch gekennzeichnet, daß** das Betätigungselement (28, 30, 32) das Bedienelement (50) einer anderen, im Kriechvorgang nicht benötigten Funktion ist.

7. Verfahren nach einem der Ansprüche 1 bis 6, **dadurch gekennzeichnet, daß** in der Steuereinrichtung (20) verschiedene feste Rangiergeschwindigkeiten vorgegeben sind, die über das Betätigungselement (28, 30, 32) abgerufen werden können.

8. Verfahren nach einem der Ansprüche 1 bis 7, **dadurch gekennzeichnet, daß** die Auswahl der Rangiergeschwindigkeit durch die Zeit der ununterbrochenen Betätigung des Betätigungselement (28, 30, 32) geschieht.

9. Verfahren nach einem der Ansprüche 1 bis 7, **dadurch gekennzeichnet, daß** die Auswahl der Rangiergeschwindigkeit durch die Anzahl der Betätigungsvorgänge des Betätigungselement (28, 30, 32) geschieht.

10. Verfahren nach einem der Ansprüche 1 bis 5, **dadurch gekennzeichnet, daß** das Signal eines Leerlaufreglers der Antriebsmaschine (4) in der Steuereinrichtung (20) in Abhängigkeit eingeschalteter Nebenverbraucher korrigiert wird.

## Claims

1. Method for determining a defined creeping of a motor vehicle (2) with an automated clutch (8) with control device (20), with a gas pedal, a brake pedal, and with an actuating element (28, 30, 32) actuated to activate creeping, with the time after activation of creeping being measured by the actuating element (28, 30, 32), **characterized in that** after transgression of a reference value, the creeping process begins at a predetermined speed and is maintained until either the brake pedal or the gas pedal is actuated.

2. Method according to claim 1, **characterized in that** the automated clutch (8) is linked to an automatic or automated transmission (6) and that actuation of the creeping process is limited to the speeds engaged for the automated forward driving range or the reverse driving range.

3. Method according to claim 1 or 2, **characterized in that** actuation of the creeping process is limited to the speeds engaged for the reverse driving range.

4. Method according to one of the claims 1 to 3, **characterized in that** the actuating element (28, 30) is hand-controlled.

5. Method according to one of the claims 1 to 3, **characterized in that** the actuating element (32) is actuated by the driver's foot not actuating the brake pedal.

6. Method according to one of the claims 1 to 5, **characterized in that** the actuating element (28, 30, 32) is the control element (50) of a function not needed in the creeping process.

7. Method according to one of the claims 1 to 6, **characterized in that** various fixed maneuvering speeds are set in the control device (20), which can be accessed via the actuating element (28, 30, 32).

8. Method according to one of the claims 1 to 7, **characterized in that** the selection of the maneuvering speed is determined by the time of uninterrupted actuation of the actuating element (28, 30, 32).

9. Method according to one of the claims 1 to 7, **characterized in that** the selection of the maneuvering speed is determined by the number of actuations of the actuating elements (28, 30, 32).

10. Method according to one of the claims 1 to 5, **characterized in that** the signal of an idle controller of the driving engine (4) in the control device (20) is corrected depending on the accessories switched on.

## Revendications

1. Méthode pour la détermination d'un procédé de « rampement » défini d'un véhicule automobile (2) doté d'un embrayage automatisé (8), d'un dispositif de commande (20), d'une pédale d'accélérateur, d'une pédale de frein et d'un élément d'actionnement (28, 30, 32), qui est déclenché pour l'activation du procédé de rampement, sachant que le temps après l'activation du procédé de rampement est mesuré par l'élément d'actionnement (18, 30, 32), **caractérisée en ce que** après le dépassement d'une valeur de référence le procédé de rampement commence par une vitesse prédéterminable et **en ce qu'**il est maintenu tant que sont actionnés ou la pédale de frein ou la pédale d'accélérateur.

2. Méthode selon la revendication 1, **caractérisée en ce que** l'embrayage automatisé (8) est lié à une boîte de vitesses automatique ou à une boîte de vitesses automatisée (6) et **en ce que** l'activation du procédé de rampement est limité aux rapports engagés de la plage de conduite en marche avant automatisée ou de la plage de conduite en marche arrière.

3. Méthode selon une des revendications 1 ou 2, **caractérisée en ce que** l'activation du procédé de rampement est limitée aux rapports engagés de la plage de conduite en marche arrière.

4. Méthode selon une des revendications 1 à 3, **caractérisée en ce que** l'élément d'actionnement (28, 30) est commandé manuellement

5. Méthode selon une des revendications 1 à 3, **caractérisée en ce que** l'élément d'actionnement (32) est commandé par le conducteur avec le pied qui n'actionne pas la pédale de frein.

6. Méthode selon une des revendications 1 à 5, **caractérisée en ce que** l'élément d'actionnement (28, 30, 32) est l'élément de commande (50) d'une autre fonction qui n'est pas utilisée pendant le procédé de rampement.

7. Méthode selon une des revendications 1 à 6, **caractérisée en ce que** dans le dispositif de commande (20) sont disponibles des vitesses de manoeuvre fixes qui peuvent être appelées par l'élément d'actionnement (28, 30, 32).

8. Méthode selon une des revendications 1 à 7, **caractérisée en ce que** le choix de la vitesse de manoeuvre est effectué par le temps de l'actionnement ininterrompu de l'élément d'actionnement (28, 30, 32).

9. Méthode selon une des revendications 1 à 7, **caractérisée en ce que** le choix de la vitesse de manoeuvre est effectué par le nombre de procédés d'actionnement de l'élément d'actionnement (28, 30, 32).

10. Méthode selon une des revendications 1 à 5, **caractérisée en ce que** le signal d'un régulateur de ralenti de la machine de traction (4) dans le dispositif de commande (20) est corrigé en fonction du nombre d'accessoires enclenchés.
